# EUROPEAN PATENT SPECIFICATION

(11) **EP 3 477 960 B1**
(45) Date of publication and mention of the grant of the patent: **25.08.2021**
(21) Application number: 17198000.6
(22) Date of filing: 24.10.2017
(51) Int. Cl.: H04Q 1/14

(54) **ADAPTER TROUGH**
ADAPTERMULDE
BAC D'ADAPTATEUR

(43) Date of publication of application: 01.05.2019
(73) Proprietor: Corning Research & Development Corporation, Corning, New York 14831 (US)
(72) Inventor: Lutterkordt, Ulrich, 42111 Wuppertal (DE); Hajok, Johann Georg, 44795 Bochum (DE); Otto, Hans-Dieter, 51688 Wipperfürth (DE); Fasce, Xavier, 41460 Neuss (DE)
(74) Representative: Epping - Hermann - Fischer

(56) References cited:
- WO-A1-2012/125252
- US-A1- 2012 094 546

## Description

This disclosure relates to mounting structures for telecommunication modules, and in particular to adapter elements that facilitate mounting of telecommunication connection strips on back mount frames as well as to a kit of parts for assembly of such adapter elements and methods of mounting such connection strips on backmount frames.

Where telecommunication network operators intend to upgrade their infrastructure, it may occur that a newly deployed type of connection strips must be mounted on various different types of existing backmount frames which were designed for mounting other, older types of connection strips. Typical backmount frames are described, for example, in the U.S. patent application US 2010/0291796 A1 or in the European patent application EP 2 083 575 A1.

Document WO 2012/125252 A1 discloses a mounting adapter for mounting different types of telecommunications terminal strips with detachable fixing means on a rack comprising two parallel holding structures. The mounting adapter comprises a central portion with a fixing structure for fixing the mounting adapter to the rack and at least two extensions extending from the central portion for receiving the detachable fixing means of the terminal strip.

In the existing infrastructure of many telecommunication network operators a considerable number of different types of existing backmount frames can be found, which were deployed successively over the past years. Traditionally, each type of existing backmount frame required a dedicated type of mechanical adapter, via which a new type of connection strip could be installed on the respective existing backmount frame. Since it is mostly unknown on what type of backmount frame a new connection strip is installed, new connection strips had to be shipped with several mechanical adapters, in order for them to be installable on several different types of backmount frames. Furthermore, installer personnel had to be trained on installing a number of different mechanical adapters.

In an attempt to address this problem, the present disclosure provides an adapter trough for mounting telecommunication connection strips, each comprising two parallel rows of contacts for connecting telecommunication signal wires therewith, on a backmount frame defining an installation width, characterized in that the adapter trough comprises
a) strip mounting means for mounting the connection strips in the adapter trough, and b) an adapter bracket for attaching the adapter trough to the backmount frame, wherein the adapter bracket can be secured to the strip mounting means in any bracket position between a first bracket position and a second bracket position, so that by selecting the bracket position, an installation size of the adapter trough can be adjusted to the installation width of the backmount frame.

The adapter trough according to the present disclosure can be attached to existing backmount frames of different widths by adjusting its bracket position such that the installation size of the adapter trough matches the required installation width of the backmount frame. While the adapter trough provides for adequate mounting of the new connection strips, the adapter bracket and its adjustability makes a provision of various adapters for various types of backmount frames obsolete. Also, the adapter bracket and its adjustability allow re-use of an existing adapter trough, after removal from a first backmount frame of a first installation width, on a second backmount frame of a second installation width.

Telecommunication connection strips are components of telecommunication networks which comprise a plurality of, e.g. eight, ten, or twenty, elongate contact elements. Telecommunication wires carrying telecommunication signals such as POTS signals or line signals or DSLAM signals, can be connected to contacts at one or both ends of such contact elements. For facilitating connection of wires, the contacts are often formed as insulation displacement contacts ("IDCs") or insulation piercing contacts ("IPCs"). The elongate contact elements are arranged parallel to each other and their corresponding contacts are arranged in parallel rows. Certain connection strips can receive overvoltage protection modules, or disconnection modules or splitter modules. Examples of connection strips are LSA-PLUS connection strips or SID connection strips available from 3M.

Backmount frames are mechanical structures, mostly of a U-shaped cross section, to receive and mount a number of connection strips in a side-by-side arrangement. For fixation of the connection strips, many backmount frames have engagement portions at the opposed "upper" ends of their U-shapes, so that corresponding opposed engagement portions of the connection strips can engage with the engagement portions of a backmount frame for securing the connection strips within the backmount frame. The space below mounted connection strips, i.e. between the "lower" edge of the connection strips and the "lower" wall of the backmount frame is often used to route telecommunication wires to and from the connection strips. For grounding and shielding purposes, many backmount frames are electrically conductive, e.g. made of metal. Examples of typical backmount frames are those commercially available from Krone.

Certain other backmount frames have no U-shaped cross section, and thus are not formed as frames, but instead comprise two parallel bars, e.g. of a circular cross section. The bars function as engagement portions of the backmount frame, and the distance between the parallel bars defines an installation width of the backmount frame. Suitable connection strips can be mounted between those bars. Adapter troughs according to the present disclosure can also be used with backmount frames of this double-bar type.

The distance between opposed corresponding engagement portions of the backmount frame, between which one connection strip is supposed to be mounted, is referred to as "installation width" of the backmount frame in the context of this disclosure. The relevant distance between the relevant engagement portions of the adapter trough is referred to herein as "installation size" of the adapter trough. For reliable mounting, it is essential that the installation size of the adapter trough matches the installation width of the backmount frame, so that the engagement portions of the backmount frame and the relevant engagement portions of the adapter trough can be connected with each other.

An adapter trough according to the present disclosure comprises strip mounting means for mounting connection strips in the adapter trough. Such strip mounting means may comprise engagement means for engaging with corresponding engagement means on the connection strips to be mounted.

In certain embodiments, the strip mounting means comprises a bottom wall and two opposed side walls, parallel to each other and orthogonal to the bottom wall and their respective bottom edges connected by the bottom wall. The side walls may stabilize the adapter trough mechanically and/or provide mechanical protection to the connection strips mounted on the strip mounting means.

In others of those embodiments, the side walls comprise, at their top edges, respective engagement means for engaging with corresponding engagement means on the connection strips to be mounted. The strip mounting means may thus be adapted to clamp a connection strip between its opposed side walls. Engagement means of the strip mounting means may be openings and/or recesses and/or protrusions in its side walls which are suitably shaped to engage with engagement means of connection strips, e.g. of standardized connection strips such as LSA type connection strips, LSA-Plus type connection strips or SID type connection strips.

In some of those embodiments, the side walls comprise axis openings which define a pivot axis and/or in which a hinge element, e.g. a hinge pin, can be engaged that defines a pivot axis. Connection strips mounted in the adapter trough may be mounted such that they can be pivoted about the pivot axis. Where a hinge element is engaged in the axis openings, connection strips may be mounted on the hinge element such that they can be pivoted about the pivot axis.

Hence generally, the strip mounting means may comprise a bottom wall and two opposed side walls, connected to the bottom wall and orthogonal to the bottom wall, wherein each side wall comprises an axis opening, and wherein the axis openings define a pivot axis about which connection strips mounted in the adapter trough can be pivoted.

Where connection strips are mounted pivotably about the pivot axis, they may be pivotable between a first pivot position in which the connection strips are easily accessible for connecting wires therewith, and second pivot position, in which the connection strips are accommodated between portions of the adapter trough. The first position may be a "work" position which facilitates manual installation and maintenance work. The second position may be a storage position, in which the connection strips are mechanically protected and stored in a space-saving manner.

Generally, the pivot axis may be arranged such as to be parallel to the lower edge of the side wall. For particularly space-saving accommodation of pivotable connection strips over a rectangular bottom wall, the pivot axis may be defined such that the pivot axis extends parallel to one of the edges of the bottom wall. Therefore, in certain embodiments, the bottom wall has two opposed parallel edges, and the axis openings are arranged such that the pivot axis extends parallel to the edges.

In other embodiments, the strip mounting means comprises a bottom wall and a side wall, connected at its bottom edge to the bottom wall and orthogonal to the bottom wall. The side wall may comprise engagement means to engage with corresponding engagement means of a pivot adapter such as to fix the pivot adapter to the strip mounting means. The pivot adapter may be adapted to support one or a plurality of connection strips. The pivot adapter may comprise a hinge element to facilitate pivoting of the one connection strip or the plurality of connection strips about a pivot axis between a first pivot position in which the connection strips are easily accessible for connecting wires therewith, and second pivot position, in which the connection strips are accommodated between portions of the adapter trough.

In one aspect of the present disclosure, a pivot adapter may be comprised in the adapter trough, e.g. in the strip mounting means. Therefore, in certain embodiments, the strip mounting means comprises a pivot adapter for mounting at least one, or all, of the connection strips in the adapter trough pivotably. The pivot adapter my define a pivot axis about which the connection strip(s) can be pivoted. The pivot adapter my comprise a hinge element defining the pivot axis.

In any of these embodiments, and generally, the strip mounting means may comprise a rear wall and/or a parallel front wall, both orthogonal to the bottom wall and connected to the bottom wall at their respective lower edges. Front wall and/or side wall may provide the strip mounting means with a greater mechanical stability.

In certain embodiments, the strip mounting means comprises a U-shaped profile with flat parallel side walls and a flat bottom wall, orthogonal to the side walls. These strip mounting means may comprise engagement means to mount a plurality of connection strips between the side walls and above the bottom wall. In certain other embodiments, the strip mounting means comprises an L-shaped profile with a flat side wall and a flat bottom wall, orthogonal to the side wall. These other strip mounting means may comprise engagement means to mount a plurality of connection strips laterally from the side wall above the bottom wall.

In yet certain other embodiments, the strip mounting means comprises a U-shaped profile with two flat parallel side walls and a flat bottom wall, orthogonal to the side walls, and a third flat mounting wall, orthogonal to the side walls and to the bottom wall, and connecting the side walls with each other. The mounting wall may comprise engagement means to mount a plurality of connection strips between the side walls and above the bottom wall. The engagement means may be adapted to engage with a pivot adapter for pivotably mounting the plurality of connection strips. Alternatively, the engagement means may be adapted to engage with the plurality of connection strips for mounting the plurality of connection strips between the side walls and above the bottom wall either pivotably or fixedly.

Connection strips mounted in the adapter trough will mostly be connected to a large number of wires carrying telecommunication signals. In order to save space, and to avoid mechanical interference between the wires and elements of the adapter trough, it is often beneficial to employ cable guides. Such cable guides may be mounted on the adapter trough. Hence the strip mounting means may comprise a flat mounting wall, extending orthogonally from the bottom wall and comprising engagement means for attachment of cable guides. Such engagement means may comprise, for example, openings, hooks, latches, clips, screws, screw holes, protrusions and/or recesses.

In any of these embodiments, the engagement means may allow to mount a plurality of connection strips pivotably.

Generally, the strip mounting means is adapted to mount one or a plurality of connection strips in the adapter trough. It may be adapted to mount one or a plurality of connection strips in the adapter trough pivotably or removably or fixedly.

In certain embodiments, the strip mounting means comprises a profile of sheet metal of a U-shaped or of an L-shaped cross section.

In certain embodiments, the strip mounting means may be adapted to mount a single connection strip. More preferably, the strip mounting means may be adapted to mount five or nine or ten or more connection strips in the adapter trough. Mounting of five or nine or ten or more connection strips in one adapter trough may reduce the number of adapter troughs required for mounting a greater number of connection strips.

In certain embodiments, the strip mounting means is electrically conductive, is made from conductive material, or comprises an electrically conductive portion. Electrical conductivity of the strip mounting means may provide certain electromagnetic shielding and facilitate provision of grounding points for grounding certain portions of the connection strips. In certain of these embodiments, the strip mounting means is made of metal.

The adapter bracket is a component of the adapter trough which serves to attach the adapter trough to the backmount frame. The adapter bracket can be secured to the strip mounting means in any bracket position between a first and a second bracket position. This allows choosing a suitable bracket position to adjust the installation size of the adapter trough to match the installation width of the backmount frame. The adapter bracket may comprise engagement means, such as openings, hooks, latches, clips, screws, screw holes, protrusions or recesses, for mechanical engagement with the backmount frame. Such frame engagement means may facilitate easy and reliable engagement of the adapter bracket with the backmount frame.

Many backmount frames are designed to engage with certain connection strips, e.g. with connection strips of the LSA type or of the LSA plus ("LSA+") type or of the SID type or of the Cobinet type. Such backmount frames may have engagement portions which facilitate engagement with these connection strips. An adapter trough as described herein can more easily be attached to such a backmount frame if its adapter bracket comprises engagement means that can engage with these engagement portions of the backmount frame. Hence, in certain embodiments, the adapter bracket comprises engagement means that is suitably shaped to engage with engagement portions of a backmount frame that is designed to engage with standard connection strips, e.g. of the LSA type or of the LSA plus ("LSA+") type or of the SID type or of the Cobinet type.

The adapter bracket can be secured to the strip mounting means in different positions, termed "bracket positions" herein, relative to the strip mounting means. Different bracket positions may result in different installation sizes of the adapter trough. The term "installation size" of the adapter trough refers to a mechanical extension of an element, or between two elements, of the adapter trough that facilitate(s) attachment of the adapter trough to the backmount frame, such as a length of the adapter bracket or distance between adapter bracket and an adapter piece. A first bracket position may result in a first installation size of the adapter trough, a second bracket position may result in a second installation size of the adapter trough.

The adapter bracket can be secured to the strip mounting means in any bracket position between a first bracket position and a second bracket position. A bracket position may thus be selected from a continuous interval of bracket positions between the first and the second bracket position. Expressed more generally, the strip mounting means and the adapter bracket are adapted to engage with each other such that the adapter bracket can be secured to the strip mounting means in any bracket position between a first bracket position and a second bracket position.

In certain embodiments the adapter bracket is secured to the strip mounting means by a screw through a screw hole in the strip mounting means and a screw hole in the adapter bracket. In some of these embodiments, the adapter bracket and/or the strip mounting means has one, two, or more elongated screw holes for securing the adapter bracket to the strip mounting means. A suitable screw can be tightened in any position that it might have in the elongated screw hole. An elongated screw hole thereby facilitates adjustment of the bracket position in any position between end positons defined by the ends of the elongated screw hole. Elongated screw holes can be manufactured in a cost-effective manner at high precision.

In certain of these embodiments, the screw hole in the strip mounting means is a circular screw hole of the size of about the screw diameter, while the screw hole in the adapter bracket is an elongated screw hole, the long extension of which is considerably larger, e.g. 5 times larger, than the diameter of the screw. Before tightening the screw, the position of the adapter bracket relative to the strip mounting means, and thereby the position of the screw in the elongated screw hole, is chosen such that the installation size of the adapter trough matches the installation width of the backmount frame. The screw is tightened in this position. In the resulting configuration of the adapter trough, the adapter bracket has a suitable installation size for the adapter trough to be installable on the backmount frame.

In certain other ones of these embodiments, an elongated screw hole as described above is comprised in the strip mounting means, while the adapter bracket comprises a circular screw hole of the size of the screw diameter. This configuration also facilitates choosing a suitable position of the adapter bracket relative to the strip mounting means, and thereby the position of the screw in the elongated screw hole, before tightening the screw, so that the installation size of the adapter trough matches the installation width of the backmount frame. Hence generally, the adapter trough may further comprise a screw, arranged in one of the elongated screw holes, by which screw the adapter bracket is movably attached to the strip mounting means in an untightened state of the screw, and by which screw the adapter bracket is fixedly attached to the strip mounting means in a tightened state of the screw. A screw is an easily available, low-cost attachment means that is straight forward to operate, and thereby facilitates cost-effective production and quick installation of an adapter trough according to the present disclosure.

Instead of a screw, other attachment means of similar shape may be employed for attaching the adapter bracket to the strip mounting means, e.g. a threaded pin with a nut, a bolt with a nut, a pin clamp, or the like.

The adapter bracket may be a single piece. Alternatively, the adapter bracket comprise a plurality of bracket elements.

The adapter bracket may not be sufficient to attach the adapter trough to the backmount frame reliably. Therefore, the adapter trough may further comprise an adapter piece for attaching the adapter trough to the backmount frame. The adapter piece may be attached, e.g. fixedly attached or movably attached, to the strip mounting means or to another element of the adapter trough. The adapter piece may comprise engagement means, such as openings, hooks, latches, clips, screws, screw holes, protrusions or recesses, for mechanical engagement with the backmount frame, e.g. with corresponding engagement means on the backmount frame. An installation size of the adapter trough may be defined by a distance between frame engagement means of the adapter piece and frame engagement means of the adapter bracket.

In one aspect of the present disclosure, the adapter bracket is electrically conductive, is made from conductive material or comprises an electrically conductive portion. The adapter bracket may, for example, be a metal adapter bracket. The adapter bracket may thereby be adapted to electrically connect the backmount frame and the adapter trough. This, in turn, may help in grounding and/or shielding of the adapter trough, and may further provide for easier and more cost-effective grounding and/or shielding of connection strips mounted in the adapter trough.

An adapter trough according to the present disclosure may be assembled from various elements. This may facilitate storage or shipping. The present disclosure therefore also provides a kit of parts, for assembly of an adapter trough as disclosed herein, comprising
a) strip mounting means for mounting connection strips, each comprising two parallel rows of contacts for connecting telecommunication signal wires therewith, on a backmount frame defining an installation width, and
b) an adapter bracket for attaching the adapter trough to the backmount frame, wherein the adapter bracket can be secured to the strip mounting means in any bracket position between a first bracket position and a second bracket position, so that by selecting the bracket position, an installation size of the adapter trough can be adjusted to the installation width of the backmount frame.

Adapter troughs according to the present disclosure will now be described in more detail with reference to the following Figures exemplifying particular embodiments of the disclosure:
- Fig. 1: Perspective sketch of a first adapter trough according to the present disclosure, attached to a backmount frame;
- Fig. 2: Perspective sketch of the adapter bracket of the first adapter trough;
- Fig. 3: Perspective sketch of an adapter piece of the first adapter trough;
- Fig. 4: Perspective view of the strip mounting element of the first adapter trough;
- Fig. 5: Perspective view of a typical connection strip; and
- Fig. 6: Side view of the first adapter trough, attached to a backmount frame, with a connection strip mounted on it.

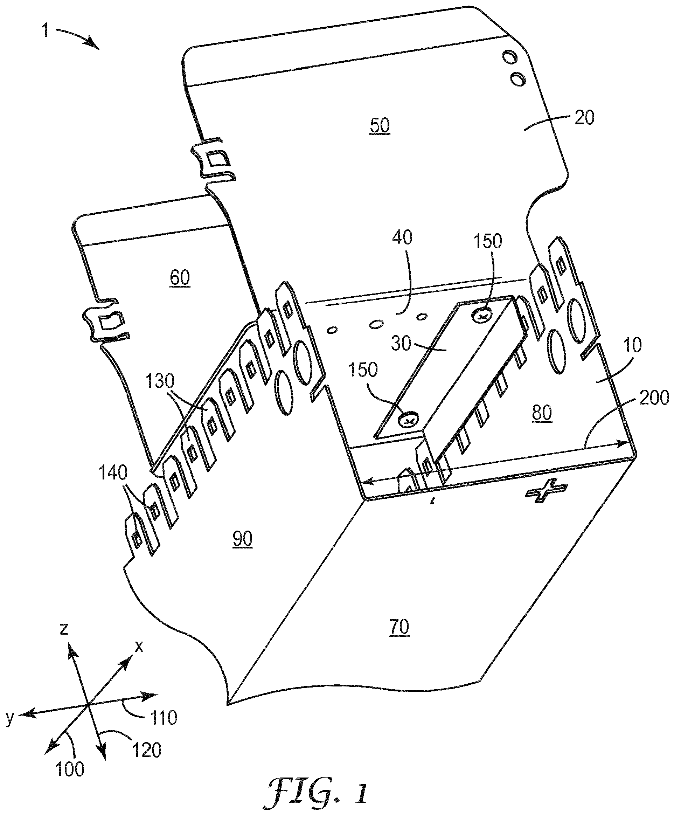

The perspective sketch of **Figure 1** illustrates a first adapter trough 1 according to the present disclosure, mounted on a backmount frame 10. The adapter trough 1 comprises a strip mounting element 20 and an adapter bracket 30, by which the adapter trough 1 is attached to the backmount frame 10. The strip mounting element 20 has a flat bottom wall 40, a flat first side wall 50 and a parallel, flat second side wall 60. Connection strips (not shown) can be mounted between the side walls 50, 60 by engaging with a pivot axis that can be attached to the strip mounting element 20, which is not shown in Figure 1.

The backmount frame 10 has a U-shaped cross section and extends longitudinally in an x direction indicated by arrow 100. It is formed by a bottom wall 70, a first side wall 80 and an opposed parallel second side wall 90. Directions orthogonal to the bottom wall 40 are referred to as z directions, indicated by arrow 120, while y directions 110 are orthogonal to both x and z directions 100, 120. The side walls 80, 90 comprise protrusions 130 and openings 140 at their respective upper edges which form engagement portions and which are suitably shaped to engage with standard connection strips, such as SID type connection strips or LSA or LSA+ type connection strips, for mounting these connection strips to the backmount frame 10.

The distance, in y direction 110, between the first side wall 80 and the second side wall 90 defines an installation width 200 of the backmount frame 10.

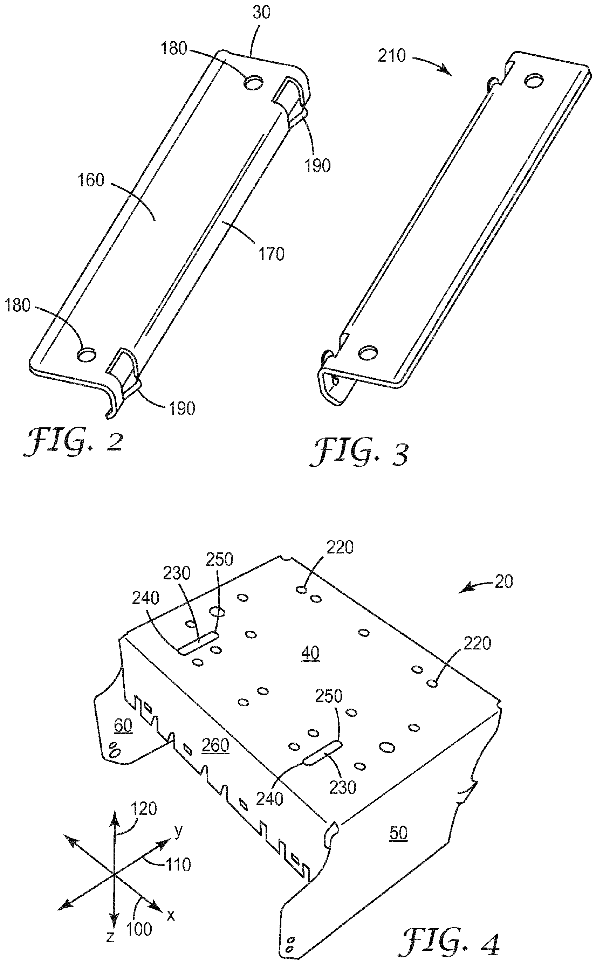

In the sketched configuration, however, the engagement portions 130, 140 of the backmount frame 10 are used to attach the adapter trough 1 to the backmount frame 10. This attachment is done via the adapter bracket 30, which is shown in greater detail in the perspective view of **Figure 2****.** The adapter bracket 30 is an elongate metal element of an L-shaped cross section, formed by a first face 160 and a second face 170, orthogonal to each other.

The first face 160 is secured to the strip mounting element 20 by two screws 150. They pass through screw holes 180 in the first face 160 and through corresponding elongated screw holes 230, extending longitudinally in y direction 110, in the bottom wall 40 of the strip mounting element 20.

The second face 170 comprises two hooks 190, spaced from each other in x direction 100, that are suitably shaped and spaced to engage with openings 140 in the openings 140 of the engagement portions of the first side wall 80 of the backmount frame 10.

For an even more reliable attachment of the adapter trough 1 to the backmount frame 10, the bottom wall 40 of the adapter trough 1 is also attached to the second side wall 90 of the backmount frame 10. This attachment is done by an adapter piece 210, similar to the adapter bracket 30, shown in a perspective view in **Figure 3****.** The adapter piece 210 is attached "behind" the second side wall 90 of the backmount frame 10, and is therefore not visible in Figure 1.

For stepwise attachment of the adapter trough 1 to the backmount frame 10, the adapter piece 210 and the adapter bracket 30 initially are firmly attached to the bottom wall 40 of the adapter trough 1. The screws 150 attaching the adapter bracket 30 are then loosened, and the adapter bracket 30 is slid in y-direction 110 towards the position of the adapter piece 210 as far as allowed by the elongated screw holes 230 in the bottom wall 40 of the strip mounting element 20. The adapter trough 1 is then placed on the backmount frame 10 and the adapter piece 210 is attached to the second side wall 90 of the backmount frame 10.

An installation size of the adapter trough 1 is defined by the distance, in y-direction 110, between the respective vertical faces of the adapter piece 210 and the adapter bracket 30, when both are attached to the bottom wall 40 of the adapter trough 1. After placing the adapter trough 1 on the backmount frame 10 and attaching the adapter piece 210 to the second side wall 90, the adapter bracket 30 is located within the U-shape profile of the backmount frame 10. In order to adjust the installation size of the adapter trough 1 to the installation width 200 of the backmount frame 10, the adapter bracket 30 is then pushed outwards, in y-direction 110, towards the first side wall 80 of the backmount frame 10, until it contacts the first side wall 80. In this position of the adapter bracket 30, the installation size of the adapter trough 1 matches the installation width 200 of the backmount frame 10, and the hooks 190 of the adapter bracket 30 engage with corresponding openings 140 in the engagement portion of the first side wall 80 of the backmount frame 10. In this position of the adapter bracket 30 relative to the strip mounting element 20, the screws 150 are tightened, so that the adapter bracket 30 is secured to the strip mounting element 20 in this bracket position.

**Figure 4** illustrates, in a further perspective view, the strip mounting element 20 of the adapter trough 1, and in particular the surface of its bottom wall 40, to which the adapter piece 210 and the adapter bracket 30 (not shown) are to be attached. For greater clarity, the strip mounting element 20 is shown rotated by 180 degrees, so that the underside of the bottom 40 faces upwards.

The bottom wall 40 comprises two circular screw holes 220 for attachment of the adapter piece 210, having a diameter of about the diameter of the screws to be used for attachment, i.e. these screw holes 220 are not elongated. The bottom wall 40 also comprises two elongate screw holes 230, the long extension of which extends in y direction 110 between a first hole end 240 and an opposed second hole end 250. With screws 150 passing through the circular screw holes 180 of the adapter bracket 30 and through the elongate screw holes 230 in the bottom wall 40 of the strip mounting element 20, the bracket position of the adapter bracket 30 relative to the strip mounting element 20 can be adjusted continuously to any bracket position between a first bracket position defined by the first hole ends 240 and a second bracket position defined by the second hole ends 250. This adjustment is done by moving the two screws 150 passing through the elongated screw holes 230, along with the adapter bracket 30, in y-direction 110 into the desired bracket position and tightening the screws 150 in this bracket position. By adjusting the bracket position, the installation size of the adapter trough can be adjusted to the installation size required by the installation width 200 of the backmount frame 10.

The elongate screw holes 230 may be used with screws, but alternatively also with bolts, pins, or protrusions of other elements of a suitable diameter that are usable for attaching the adapter bracket 30 to the adapter trough 1.

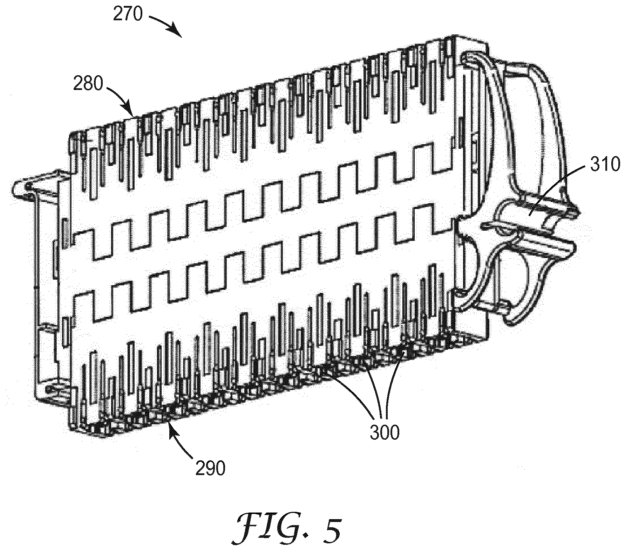

The adapter trough 1 illustrated in Figure 4 also comprises a mounting wall 260, connected to the bottom wall 40 and extending in the same direction, namely the z-direction 120, as the side walls 50, 60, orthogonally to the bottom wall 40. Protrusions, recesses and openings in the mounting wall 260 can be used to mount connection strips 270 (as illustrated in Figure 5 below) in the adapter trough 1, between the side walls 50, 60 and the bottom wall 40. These connection strips 270 can be mounted directly on the mounting wall 260, or they can be mounted on one or more pivot adapters, which in turn can be mounted on the mounting wall 260. Such a pivot adapter allows pivoting of individual connection strips 270, or of all connection strips 270 collectively, about a common pivot axis. Advantageously, a pivot adapter defines the pivot axis such that the pivot axis is oriented parallel to the bottom wall 40, and in particular parallel to a surface normal of one of the flat, parallel side walls 50, 60.

**Figure 5** illustrates, in a perspective view, a typical connection strip 270 that can be used with an adapter trough, such as the first adapter trough 1, according to the present disclosure. The connection strip 270 shown in Figure 5 is of the NC type, available from 3M, and comprises a first row of contacts (not visible) on its upper side 280 and a parallel second row of contacts 300 on its lower side 290. These contacts 300 are formed as IDC contacts 300, which facilitate mechanical connection of telecommunication wires. The connection strip 270 features a hinge structure 310, which is suitable for engagement with a pivot adapter that may be attached to the mounting wall 260 of the adapter trough 1. The adapter trough 1 is wide enough to accommodate up to nine connection strips 270 of the type shown in Figure 4 between its side walls 50, 60 in a pivotable configuration.

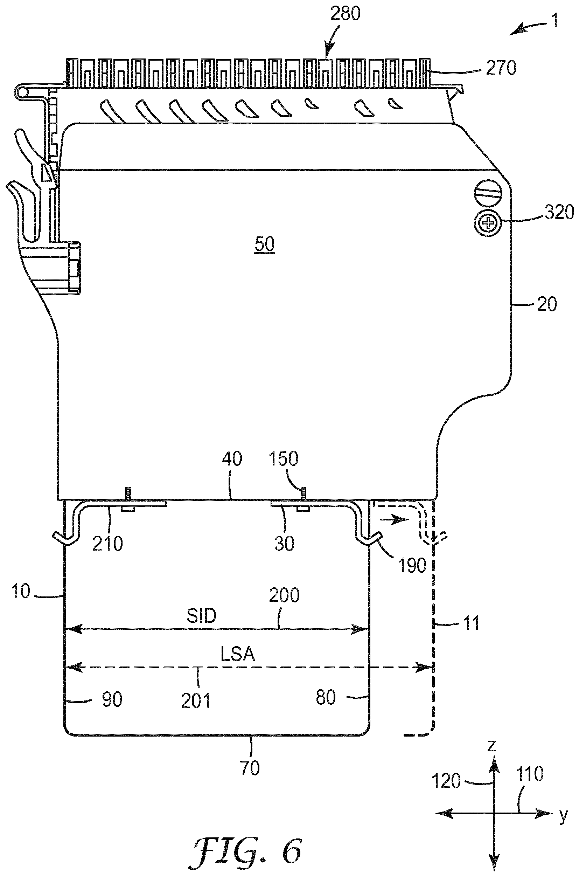

**Figure 6** is a side view, partially sectional, in x direction 100, of the first adapter trough 1, attached to the backmount frame 10, with a connection strip 270 mounted in it. The upper side 280 of the connection strip 270 is visible in Figure 6. A pivot axis has been added to the adapter trough 1, about which the connection strip 270 can pivot. The pivot axis has been fixed in axis openings 320. The pivot axis extends lengthwise in x direction 100. The adapter trough 1 is shown attached to a backmount frame 10 that is normally used for mounting SID type connection strips between its side walls 80, 90. This backmount frame 10 defines a certain installation width 200 for SID type connection strips. The adapter bracket 30 has been positioned such that the installation size of the adapter trough 1 (i.e. the distance between the respective vertical faces of its adapter piece 210 and the adapter bracket 30) is adjusted to the installation width 200 of the backmount frame 10.

In dotted lines, Figure 6 shows the contour of an alternative backmount frame 11, designed to mount connection strips of the LSA type, where it differs from the contour of the backmount frame 10. This alternative backmount frame 11 is wider in y direction 110 than the backmount frame 10. This alternative backmount frame 11 thus defines a different installation width 201, because it is designed to mount longer LSA type connection strips in it. The installation size of the adapter trough 1 can be adjusted to the installation width 201 of the alternative backmount frame 11 by loosening the screws 150 in the elongated screw holes 230 in the bottom wall 40 of the strip mounting element 20, pushing the adapter bracket 30 and the screws 150 in the direction of the elongated screw holes 230 (i.e. in y direction 110) away from the adapter piece 210 into a new desired bracket position, so that its hooks 190 can engage with engagement portions 130, 140 in the side wall of the alternative backmount frame 11, and fastening the screws 150 again.

## Claims

1. Adapter trough (1) for mounting telecommunication connection strips (270), each comprising two parallel rows of contacts for connecting telecommunication signal wires therewith, on a backmount frame (10, 11) defining an installation width (200, 201),
**characterized in that** the adapter trough (1) comprises
a) strip mounting means (20) for mounting the connection strips in the adapter trough (1),
b) an adapter bracket (30) for attaching the adapter trough (1) to the backmount frame (10, 11), wherein the adapter bracket (30)is configured to be secured to the strip mounting means (20) in any bracket position between a first bracket position and a second bracket position, so that by selecting the bracket position, an installation size of the adapter trough (1) is adjusted to match the installation width (200, 201) of the backmount frame (10, 11).

2. Adapter trough according to claim 1, wherein the strip mounting means (20) comprises a pivot adapter for mounting at least one of the connection strips (270) in the adapter trough (1) pivotably.

3. Adapter trough according to any one of the preceding claims, wherein the strip mounting means (20) is adapted to mount five or nine or ten or more connection strips (270) in the adapter trough (1).

4. Adapter trough according to any one of the preceding claims, wherein the adapter bracket (30) and/or the strip mounting means (20) has one, two, or more elongated screw holes (230) for securing the adapter bracket to the strip mounting means.

5. Adapter trough according to claim 4, further comprising a screw (150), arranged in one of the elongated screw holes (230), by which screw the adapter bracket (30) is movably attached to the strip mounting means (20) in an untightened state of the screw, and by which screw the adapter bracket (30) is fixedly attached to the strip mounting means (20) in a tightened state of the screw.

6. Adapter trough according to any one of the preceding claims, wherein the adapter bracket (30) is electrically conductive, is made from conductive material or comprises an electrically conductive portion, for electrically connecting the backmount frame (10) with the strip mounting means (20).

7. Adapter trough according to any one of the preceding claims, wherein the strip mounting means (20) is electrically conductive, is made from conductive material, or comprises an electrically conductive portion.

8. Adapter trough according to any one of the preceding claims, wherein the strip mounting means (20) comprises a bottom wall (40) and two opposed side walls (50, 60), connected to the bottom wall and orthogonal to the bottom wall, wherein each side wall comprises an axis opening (320), and wherein the axis openings define a pivot axis about which connection strips (270) mounted in the adapter trough (1) can be pivoted.

9. Adapter trough according to claim 8, wherein the bottom wall (40) has two opposed parallel edges, and wherein the axis openings (320) are arranged such that the pivot axis extends parallel to the edges.

10. Adapter trough according to claim 8 or 9, wherein the strip mounting means (20) comprises a flat mounting wall (260), extending orthogonally from the bottom wall (40) and comprising engagement means for attachment of cable guides, such as openings, hooks, latches, clips, screws, screw holes, protrusions and/or recesses.

11. Adapter trough according to any one of the preceding claims, wherein the adapter bracket (30) comprises engagement means (190), such as openings, hooks, latches, clips, screws, screw holes, protrusions or recesses, for mechanical engagement with the backmount frame (10).

12. Adapter trough according to any one of the preceding claims, wherein the adapter bracket (30) comprises engagement means (190) that is suitably shaped to engage with engagement portions (130, 140) of a backmount frame (10) that is designed to engage with standard connection strips (270), e.g. of the LSA type or of the LSA plus ("LSA+") type or of the SID type or of the Cobinet type.

13. Adapter trough according to any one of the preceding claims, wherein the adapter trough (1) further comprises an adapter piece (210) for attaching the adapter trough to the backmount frame (10), the adapter piece comprising engagement means, such as openings, hooks, latches, clips, screws, screw holes, protrusions or recesses for mechanical engagement with the backmount frame.

14. Kit of parts, for assembly of an adapter trough (1) according to any one of the preceding claims, comprising
a) strip mounting means (20) for mounting connection strips (270), each comprising two parallel rows of contacts for connecting telecommunication signal wires therewith, on a backmount frame (10, 11) defining an installation width, and
b) an adapter bracket (30) for attaching the adapter trough (1) to the backmount frame (10), wherein the adapter bracket is configured to be secured to the strip mounting means (20) in any bracket position between a first bracket position and a second bracket position, so that by selecting the bracket position, an installation size of the adapter trough (1) is adjusted to match the installation width (200, 201) of the backmount frame (10, 11).

15. Method of mounting telecommunication connection strips (270) on a backmount frame (10), the method comprising the steps of
a) providing a backmount frame (10, 11) defining an installation width (200, 201) and an adapter trough (1) according to any one of claims 1 to 13;
b) adjusting the installation size of the adapter trough (1) to match the installation width (200, 201) of the backmount frame (10, 11) by securing the adapter bracket (30) to the strip mounting means (20) in a bracket position; and
c) attaching the adapter trough (1) to the backmount frame (10, 11).

## Patentansprüche

1. Adapterwanne (1) zum Montieren von Telekommunikationsanschlussleisten (270), die jeweils zwei parallele Reihen von Kontakten zum Verbinden von Telekommunikationssignalleitungen damit umfassen, auf eine Montagewanne (10, 11), die eine Einbaubreite (200, 201) definiert,
**dadurch gekennzeichnet, dass** die Adapterwanne (1) umfasst:
a) ein Leistenmontagemittel (20) zum Montieren der Anschlussleisten in die Adapterwanne (1),
b) eine Adapterhalterung (30) zum Anbringen der Adapterwanne (1) an der Montagewanne (10, 11), wobei die Adapterhalterung (30) dazu eingerichtet ist, in einer beliebigen Halterungsposition zwischen einer ersten Halterungsposition und einer zweiten Halterungsposition an dem Leistenmontagemittel (20) befestigt zu werden, sodass durch Wahl der Halterungsposition eine Einbaugröße der Adapterwanne (1) derart angepasst wird, dass sie zur Einbaubreite (200, 201) der Montagewanne (10, 11) passt.

2. Adapterwanne nach Anspruch 1, wobei das Leistenmontagemittel (20) einen Schwenkadapter zum schwenkbaren Montieren von mindestens einer der Anschlussleisten (270) in die Adapterwanne (1) umfasst.

3. Adapterwanne nach einem der vorhergehenden Ansprüche, wobei das Leistenmontagemittel (20) geeignet ist, um fünf oder neun oder zehn oder mehr Anschlussleisten (270) in die Adapterwanne (1) zu montieren.

4. Adapterwanne nach einem der vorhergehenden Ansprüche, wobei die Adapterhalterung (30) und/oder das Leistenmontagemittel (20) ein, zwei oder mehr längliche Schraubenlöcher (230) zum Befestigen der Adapterhalterung an dem Leistenmontagemittel aufweisen/aufweist.

5. Adapterwanne nach Anspruch 4, ferner umfassend eine Schraube (150), die in einem der länglichen Schraubenlöcher (230) angeordnet ist, wobei die Adapterhalterung (30) mit dieser Schraube in einem nicht festgezogenen Zustand der Schraube beweglich an dem Leistenmontagemittel (20) angebracht ist und wobei die Adapterhalterung (30) mit dieser Schraube in einem festgezogenen Zustand der Schraube fest an dem Leistenmontagemittel (20) angebracht ist.

6. Adapterwanne nach einem der vorhergehenden Ansprüche, wobei die Adapterhalterung (30) elektrisch leitend ist, aus einem leitfähigen Material besteht oder einen elektrisch leitenden Abschnitt umfasst, um die Montagewanne (10) mit dem Leistenmontagemittel (20) elektrisch zu verbinden.

7. Adapterwanne nach einem der vorhergehenden Ansprüche, wobei das Leistenmontagemittel (20) elektrisch leitend ist, aus einem leitfähigen Material besteht oder einen elektrisch leitenden Abschnitt umfasst.

8. Adapterwanne nach einem der vorhergehenden Ansprüche, wobei das Leistenmontagemittel (20) eine Bodenwand (40) und zwei gegenüberliegende Seitenwände (50, 60) umfasst, die mit der Bodenwand verbunden und orthogonal zu der Bodenwand sind, wobei jede Seitenwand eine Achsenöffnung (320) umfasst und wobei die Achsenöffnungen eine Schwenkachse definieren, um die in die Adapterwanne (1) montierte Anschlussleisten (270) geschwenkt werden können.

9. Adapterwanne nach Anspruch 8, wobei die Bodenwand (40) zwei gegenüberliegende parallele Kanten hat und wobei die Achsenöffnungen (320) derart angeordnet sind, dass die Schwenkachse parallel zu den Kanten verläuft.

10. Adapterwanne nach Anspruch 8 oder 9, wobei das Leistenmontagemittel (20) eine plane Montagewand (260) umfasst, die sich orthogonal von der Bodenwand (40) erstreckt und Eingriffsmittel für die Befestigung von Kabelführungen wie Öffnungen, Haken, Klinken, Clips, Schrauben, Schraubenlöcher, Vorsprünge und/oder Vertiefungen umfasst.

11. Adapterwanne nach einem der vorhergehenden Ansprüche, wobei die Adapterhalterung (30) Eingriffsmittel (190) wie Öffnungen, Haken, Klinken, Clips, Schrauben, Schraubenlöcher, Vorsprünge oder Vertiefungen für den mechanischen Eingriff mit der Montagewanne (10) umfasst.

12. Adapterwanne nach einem der vorhergehenden Ansprüche, wobei die Adapterhalterung (30) Eingriffsmittel (190) umfasst, die passend geformt sind, um mit Eingriffsabschnitten (130, 140) einer Montagewanne (10) in Eingriff zu sein, die gestaltet ist, um mit standardmäßigen Anschlussleisten (270), z.B. vom Typ LSA oder vom Typ LSA-Plus ("LSA+") oder vom Typ SID oder vom Typ CobiNet, in Eingriff zu sein.

13. Adapterwanne nach einem der vorhergehenden Ansprüche, wobei die Adapterwanne (1) ferner ein Adapterstück (210) zum Anbringen der Adapterwanne an der Montagewanne (10) umfasst, wobei das Adapterstück Eingriffsmittel wie Öffnungen, Haken, Klinken, Clips, Schrauben, Schraubenlöcher, Vorsprünge oder Vertiefungen für den mechanischen Eingriff mit der Montagewanne umfasst.

14. Teilesatz für den Zusammenbau einer Adapterwanne (1) nach einem der vorhergehenden Ansprüche, umfassend:
a) ein Leistenmontagemittel (20) zum Montieren von Anschlussleisten (270), die jeweils zwei parallele Reihen von Kontakten zum Verbinden von Telekommunikationssignalleitungen damit umfassen, auf eine Montagewanne (10, 11), die eine Einbaubreite definiert, und
b) eine Adapterhalterung (30) zum Anbringen der Adapterwanne (1) an der Montagewanne (10), wobei die Adapterhalterung dazu eingerichtet ist, in einer beliebigen Halterungsposition zwischen einer ersten Halterungsposition und einer zweiten Halterungsposition an dem Leistenmontagemittel (20) befestigt zu werden, sodass durch Wahl der Halterungsposition eine Einbaugröße der Adapterwanne (1) derart angepasst wird, dass sie zur Einbaubreite (200, 201) der Montagewanne (10, 11) passt.

15. Verfahren zum Montieren von Telekommunikationsanschlussleisten (270) auf eine Montagewanne (10), wobei das Verfahren die folgenden Schritte umfasst:
a) Bereitstellen einer Montagewanne (10, 11), die eine Einbaubreite (200, 201) definiert, und einer Adapterwanne (1) nach einem der Ansprüche 1 bis 13;
b) Anpassen der Einbaugröße der Adapterwanne (1) derart, dass sie zur Einbaubreite (200, 201) der Montagewanne (10, 11) passt, durch Befestigen der Adapterhalterung (30) an dem Leistenmontagemittel (20) in einer Halterungsposition; und
c) Befestigen der Adapterwanne (1) an der Montagewanne (10, 11).

## Revendications

1. Goulotte d'adaptateur (1) pour le montage de barrettes de connexion de télécommunication (270), chacune comprenant deux rangées parallèles de contacts pour connecter des fils de signal de télécommunication à celle-ci, sur un cadre de support arrière (10, 11) définissant une largeur d'installation (200, 201),
**caractérisée en ce que** la goulotte d'adaptateur (1) comprend
a) un moyen de montage de barrettes (20) pour monter les barrettes de connexion dans la goulotte d'adaptateur (1),
b) un support d'adaptateur (30) pour attacher la goulotte d'adaptateur (1) au cadre de support arrière (10, 11), le support d'adaptateur (30) étant conçu pour être fixé au moyen de montage de barrettes (20) dans n'importe quelle position de support entre une première position de support et une deuxième position de support, de telle sorte que, par sélection de la position de support, une dimension d'installation de la goulotte d'adaptateur (1) est ajustée pour correspondre à la largeur d'installation (200, 201) du cadre de support arrière (10, 11).

2. Goulotte d'adaptateur selon la revendication 1, le moyen de montage de barrettes (20) comprenant un adaptateur pivotant pour monter au moins l'une des barrettes de connexion (270) dans la goulotte d'adaptateur (1) de manière pivotante.

3. Goulotte d'adaptateur selon l'une quelconque des revendications précédentes, le moyen de montage de barrettes (20) étant conçu pour monter cinq ou neuf ou dix barrettes de connexion (270), ou plus, dans la goulotte d'adaptateur (1).

4. Goulotte d'adaptateur selon l'une quelconque des revendications précédentes, le support d'adaptateur (30) et/ou le moyen de montage de barrettes (20) présentant un ou deux trous de vis allongés (230), ou plus, pour fixer le support d'adaptateur au moyen de montage de barrettes.

5. Goulotte d'adaptateur selon la revendication 4, comprenant en outre une vis (150), agencée dans l'un des trous de vis allongés (230), laquelle vis attache le support d'adaptateur (30) de manière mobile au moyen de montage de barrettes (20) dans un état non serré de la vis et laquelle vis attache le support d'adaptateur (30) de manière fixe au moyen de montage de barrettes (20) dans un état serré de la vis.

6. Goulotte d'adaptateur selon l'une quelconque des revendications précédentes, le support d'adaptateur (30) étant électriquement conducteur, étant fait d'un matériau conducteur ou comprenant une partie électriquement conductrice, pour connecter électriquement le cadre de support arrière (10) au moyen de montage de barrettes (20).

7. Goulotte d'adaptateur selon l'une quelconque des revendications précédentes, le moyen de montage de barrettes (20) étant électriquement conducteur, étant fait d'un matériau conducteur ou comprenant une partie électriquement conductrice.

8. Goulotte d'adaptateur selon l'une quelconque des revendications précédentes, le moyen de montage de barrettes (20) comprenant une paroi inférieure (40) et deux parois latérales opposées (50, 60), reliées à la paroi inférieure et orthogonales à la paroi inférieure, chaque paroi latérale comprenant une ouverture d'axe (320) et les ouvertures d'axe définissant un axe de pivotement autour duquel des barrettes de connexion (270) montées dans la goulotte d'adaptateur (1) peuvent être pivotées.

9. Goulotte d'adaptateur selon la revendication 8, la paroi inférieure (40) présentant deux bords parallèles opposés et les ouvertures d'axe (320) étant agencées de telle sorte que l'axe de pivotement s'étend parallèlement aux bords.

10. Goulotte d'adaptateur selon la revendication 8 ou 9, le moyen de montage de barrettes (20) comprenant une paroi de montage plate (260), s'étendant orthogonalement à partir de la paroi inférieure (40) et comprenant des moyens de mise en prise pour attacher des guides de câble, tels que des ouvertures, des crochets, des verrous, des pinces, des vis, des trous de vis, des saillies et/ou des évidements.

11. Goulotte d'adaptateur selon l'une quelconque des revendications précédentes, le support d'adaptateur (30) comprenant des moyens de mise en prise (190), tels que des ouvertures, des crochets, des verrous, des pinces, des vis, des trous de vis, des saillies ou des évidements, pour une mise en prise mécanique avec le cadre de support arrière (10).

12. Goulotte d'adaptateur selon l'une quelconque des revendications précédentes, le support d'adaptateur (30) comprenant un moyen de mise en prise (190) qui est façonné de manière appropriée pour venir en prise avec des parties de mise en prise (130, 140) d'un cadre de support arrière (10) qui est conçu pour venir en prise avec des barrettes de connexion standard (270), par exemple du type LSA ou du type LSA plus (« LSA+ ») ou du type SID ou du type Cobinet.

13. Goulotte d'adaptateur selon l'une quelconque des revendications précédentes, la goulotte d'adaptateur (1) comprenant en outre une pièce d'adaptateur (210) pour attacher la goulotte d'adaptateur au cadre de support arrière (10), la pièce d'adaptateur comprenant des moyens de mise en prise, tels que des ouvertures, des crochets, des verrous, des pinces, des vis, des trous de vis, des saillies ou des évidements pour une mise en prise mécanique avec le cadre de montage arrière.

14. Kit de pièces, pour l'assemblage d'une goulotte d'adaptateur (1) selon l'une quelconque des revendications précédentes, comprenant
a) un moyen de montage de barrettes (20) pour monter des barrettes de connexion (270), chacune comprenant deux rangées parallèles de contacts pour connecter des fils de signal de télécommunication à celle-ci, sur un cadre de support arrière (10, 11) définissant une largeur d'installation et
b) un support d'adaptateur (30) pour attacher la goulotte d'adaptateur (1) au cadre de support arrière (10), le support d'adaptateur étant conçu pour être fixé au moyen de montage de barrettes (20) dans n'importe quelle position de support entre une première position de support et une deuxième position de support, de telle sorte que, par sélection de la position de support, une dimension d'installation de la goulotte d'adaptateur (1) est ajustée pour correspondre à la largeur d'installation (200, 201) du cadre de support arrière (10, 11).

15. Procédé de montage de barrettes de connexion de télécommunication (270) sur un cadre de support arrière (10), le procédé comprenant les étapes de
a) fourniture d'un cadre de support arrière (10, 11) définissant une largeur d'installation (200, 201) et une goulotte d'adaptateur (1) selon l'une quelconque des revendications 1 à 13 ;
b) ajustement de la dimension d'installation de la goulotte d'adaptateur (1) pour correspondre à la largeur d'installation (200, 201) du cadre de support arrière (10, 11) par la fixation du support d'adaptateur (30) au moyen de montage de barrettes (20) dans une position de support ; et
c) attache de la goulotte d'adaptateur (1) au cadre de support arrière (10, 11).
